# EUROPÄISCHE PATENTSCHRIFT

(11) **EP 0 508 144 B1**
(45) Veröffentlichungstag und Bekanntmachung des Hinweises auf die Patenterteilung: **25.10.1995**
(21) Anmeldenummer: 92104250.3
(22) Anmeldetag: 12.03.1992
(51) Int. Cl.: B01D 17/02

(54) **Vorrichtung zum Abscheiden von aufschwimmendem Oel von Oel-Wasser-Gemischen**
Apparatus for separating floating oil from a mixture of oil and water
Dispositif pour séparer l'huile qui flotte d'un mélange d'eau et d'huile

(30) Priorität: 03.04.1991 DE 4110726
(43) Veröffentlichungstag der Anmeldung: 14.10.1992
(73) Patentinhaber: Koch, Berthold, D-41468 Neuss (DE)
(72) Erfinder: Koch, Berthold, D-41468 Neuss (DE)
(74) Vertreter: Türk, Gille, Hrabal, Leifert

(56) Entgegenhaltungen:
- FR-A- 2 434 642
- NL-A- 8 201 232
- US-A- 4 145 286
- US-A- 4 436 630

## Beschreibung

Die Erfindung betrifft eine Vorrichtung zum Abscheiden von aufschwimmendem Öl von Öl-Wasser-Gemischen, welche einen das Gemisch aufnehmenden Behälter umfaßt, der einen Zulauf für das Gemisch und getrennte Abläufe für das aufgeschwommene Öl und das übrige Flüssigkeits-Gemisch sowie drei Sensoren aufweist, die höhenmäßig gegeneinander versetzt im oder am Behälter angeordnet sind. Eine derartige Vorrichtung ist z.B. aus der US-A-4 436 630 und der NL-A-8 201 232 bekannt.

Öl-Wasser-Gemische wie Emulsionen enthalten einen verhältnismäßig großen Anteil von frei abscheidbarem Öl, das auf die Oberfläche aufschwimmt, wenn das Gemisch mehr oder weniger ruhend bzw. unbewegt gehalten wird. Bei aus Druckluft-, Druckgas- oder Heißdampfsystemen abgeschiedenem Kondensat kann bis zu 98% des im Kondensat enthaltenen Öls durch Aufschwimmen frei abgeschieden werden. Bei anderen Öl-Wasser-Systemen ist der im Wasser emulgierte und damit nicht frei abscheidbare Anteil des Öls zwar größer, jedoch kann auch bei derartigen Gemischen der Ölanteil größtenteils aufschwimmen.

Es ist wünschenswert, das auf der Flüssigkeitsmasse aufgeschwommene Öl eines Öl-Wasser-Gemisches von dem Rest der Flüssigkeit abzuscheiden, bevor diese Flüssigkeit, welche noch Öl in Suspension bzw. emulgiert enthält, einer Emulsionstrennung unterzogen wird.

Aufgabe der Erfindung ist es, das auf einer Flüssigkeitsmasse aufgeschwommene Öl in einfacher Weise und auch bei schwankendem Niveaustand der Flüssigkeitsmasse von dieser bei vollautomatischem Betrieb wirksam abscheiden zu können.

Diese Aufgabe wird erfindungsgemäß mit einer Vorrichtung der eingangs genannten Gattung gelöst, welche die Merkmale des Patentanspruches 1 aufweist. Vorteilhafte Ausgestaltungen der Erfindung sind Gegenstand der Unteransprüche.

Obwohl bei Öl-Wasser-Gemischen oder ähnlichen Flüssigkeits-Gemischen das aufgeschwommene Öl nicht völlig frei von Wassereinschlüssen ist und in der Wassermasse noch Ölbestandteile emulgiert enthalten sind, kann für eine Vorabscheidung gesagt und davon ausgegangen werden, daß das aufgeschwommene freie Öl im wesentlichen rein und von dem Wasser oder der sonstigen Flüssigkeit, die schwerer als Öl ist, eindeutig abgeschieden ist.

Bei der erfindungsgemäßen Vorrichtung sind höhenmäßig übereinander wenigstens drei Sensoren angeordnet, die den getrennten Ablauf von aufgeschwommenem und damit abgeschiedenem Öl und dem restlichen Flüssigkeits-Gemisch steuern. Der am weitesten oben angeordnete Sensor stellt das Ansteigen der in einem Behälter befindlichen Flüssigkeit über ein bestimmtes Niveau fest, wobei dieser Sensor keinen Unterschied zwischen Öl und anderer Flüssigkeit wie Wasser macht. Ein zweiter, tiefer angeordneter Sensor spricht auf in seinem Bereich befindliches Öl nicht an, sondern nur auf andere Flüssigkeiten und insbesondere Wasser, so daß er erst dann aktiv wird, wenn sich in seinem Bereich kein abgeschiedenes Öl mehr befindet, sondern beispielsweise Wasser. Ein noch tiefer angeordneter dritter Sensor spricht nur auf Wasser oder ähnliche Flüssigkeit, nicht jedoch auf Öl an, wobei er Steuersignale nur abgibt, wenn der Wasserstand unter sein Niveau gesunken ist.

Auf diese Weise läßt sich vollautomatisch das vom Flüssigkeits-Gemisch durch Aufschwimmen abgeschiedene Öl getrennt vom restlichen Flüssigkeits-Gemisch, das noch Öl in Emulsion enthalten kann, abführen, während die Ölemulsion einer Emulsionstrennanlage zugeführt wird.

In der Zeichnung sind zwei Ausführungsbeispiele der erfindungsgemäßen Vorrichtung jeweils in einem senkrechten Schnitt schematisch dargestellt, und zwar zeigt
- Fig. 1: eine erste Ausführungsform der Vorrichtung und
- Fig. 2: eine zweite Ausführungsform der Vorrichtung.

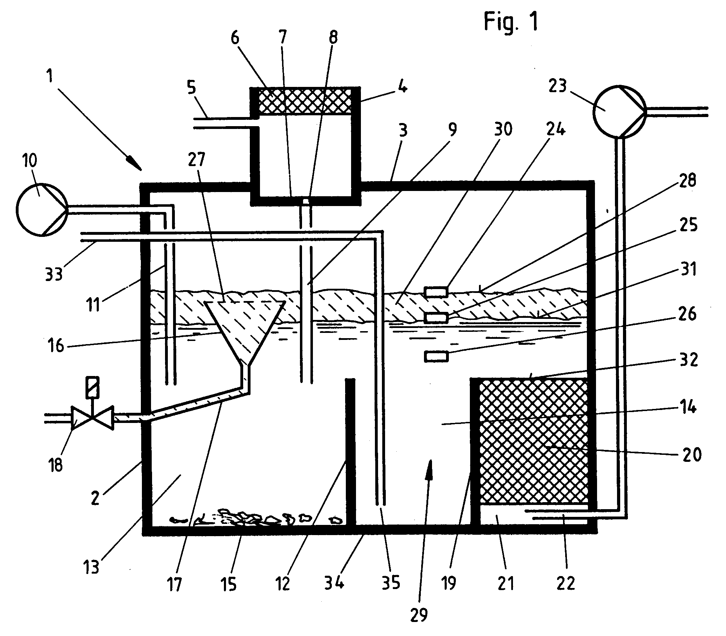

Die in Fig. 1 dargestellte Vorrichtung (1) zum Abscheiden von aufgeschwommenem Öl von Öl-Wasser-Gemischen hat ein beckenförmiges Gehäuse (2), das mit einem abnehmbaren plattenförmigen Deckel (3) geschlossen ist.

Die Vorrichtung (1) ist mit zwei Zuläufen für ein Öl-Wasser-Gemisch versehen, welche gemeinsam oder auch getrennt benutzt werden können und die auch nicht gemeinsam vorgesehen sein müssen.

Im einzelnen ist in den Deckel (3) ein topfartiger Kopf (4) eingelassen, in den eine Zulaufleitung (5) für unter Druck stehendes, beispielsweise aus einem Drucksystem abgeschiedenes Kondensat mündet und der am oberen Ende ein Filter (6) enthält, durch das mit dem durch die Zulaufleitung (5) eingetragenen Kondensat mitgeführte Luft entweichen kann. Im in das Gehäuse (2) hineinragenden Boden (7) des Kopfes (4) ist eine Auslauföffnung (8) vorgesehen, die in ein sich in das Gehäuse (2) erstreckendes Fallrohr (9) mündet. Durch dieses Fallrohr (9) läuft jedes Flüssigkeits-Gemisch, das durch die Zulaufleitung (5) zugeführt wird, drucklos in das Gehäuse (2) und füllt dieses sozusagen nach.

Als weiterer und ebenfalls wahlweise einsetzbarer Zulauf ist eine Förderpumpe (10) vorgesehen, die in ein Auslaufrohr (11) fördert, welches in das Gehäuse hineingeführt ist und in dieses mündet.

Innerhalb des beckenförmigen Gehäuses (2) befindet sich eine senkrecht hochstehende Trennwand (12), welche den unteren Bereich des Gehäuses (2) in zwei Abschnitte (13, 14) unterteilt.

Das Fallrohr (9) und das Auslaufrohr (11) münden in den - in Fig. 1 links angeordneten - Abschnitt (13), in welchem sich am Boden nicht schwimmfähige Verunreinigungen (15) ablagern können und sollen, die von Zeit zu Zeit in nicht dargestellter Weise abgesaugt werden.

Im Abschnitt (13) des beckenförmigen Gehäuses (2) ist ein Trichter (16) angeordnet, durch den aufgeschwommenes Öl ablaufen kann. Dieser Trichter (16) ist mit einer Auslaßleitung (17) versehen, die aus dem Gehäuse (2) nach außen geführt ist und auf der Außenseite ein steuerbares Ventil (18) enthält, das beispielsweise ein Magnetventil sein kann. Alternativ kann statt dem Ventil (18) auch eine steuerbare Förderpumpe vorgesehen sein.

Im anderen Abschnitt (14) des beckenförmigen Gehäuses (2) ist eine nach oben offene Kammer (19) angeordnet, in die ein ihren Querschnitt ausfüllendes Koaleszenz-Filter (20) eingebaut ist. In das untere Ende (21) der Kammer (19) mündet unterhalb des Koaleszenz-Filters die Saugleitung (22) einer Pumpe (23), mit der Flüssigkeit aus dem Gehäuse (2) abgesaugt und einer nicht dargestellten Emulsionstrennanlage zugeführt werden kann.

Am Gehäuse (2) und vorzugsweise auf der Außenseite einer Seitenwand desselben sind übereinander drei hier im einzelnen nicht näher dargestellte Sensoren (24, 25, 26) angeordnet, welche Steuersignale liefern können und somit für eine vollautomatische Steuerung der Vorrichtung (1) sorgen.

Der oberste Sensor (24) ist etwas höher als der obere Rand (27) des Trichters (16) angeordnet und so ausgelegt, daß er ein Steuersignal liefert, wenn der oberste Spiegel (28) einer im Gehäuse (2) befindlichen Flüssigkeit ihn erreicht. Da die Vorrichtung (1) dazu vorgesehen ist, aufschwimmendes Öl von Wasser oder einer ähnlichen Flüssigkeit zu trennen, ist der oberste Spiegel (28) im allgemeinen der Spiegel eines auf einer Flüssigkeitsfüllung befindlichen Ölfilmes (30). Da der Sensor (24) höher als der obere Rand (27) des Trichters (16) angeordnet ist, spricht der Sensor (24) erst an, wenn der Spiegel (28) des Ölfilms (3) über den oberen Rand (27) des Trichters (16) angestiegen ist. Der Sensor (24) liefert ein Steuersignal, welches das Ventil (18) öffnet, damit der aufgeschwommene Ölfilm (30) durch den Trichter (16) und die Auslaßleitung (17) abfließen kann, wenn sich auch Öl im Bereich des mittleren Sensors (25) befindet und dieser daher nicht anspricht.

Ist so viel aufgeschwommenes Öl abgeflossen, daß der Spiegel (28) des Ölfilms (30) unter den Sensor (24) abgesunken ist, liefert dieser kein Steuersignal mehr, So daß das Ventil (18) schließt und damit den Ölablauf unterbricht, wobei eine Zeitverzögerung vorgesehen sein kann.

Sowohl der mittlere Sensor (25) als auch der unterste Sensor (26) sprechen nur auf Wasser oder eine ähnliche Flüssigkeit an, nicht hingegen auf Öl. Der mittlere Sensor (25) ist dabei so ausgelegt, daß er ein Steuersignal liefert, wenn ihn der obere Spiegel (31) der Flüssigkeitsfüllung (29), die im allgemeinen Wasser oder eine Öl-Wasser-Emulsion ist, erreicht. Solange sich noch der aufgeschwommene Ölfilm (30) im Bereich des Sensors (25) befindet, liefert dieser kein Steuersignal.

Liefert der mittlere Sensor (25) ein Steuersignal, so wird die Pumpe (23) eingeschaltet, die dann durch die Saugleitung (22) Flüssigkeit aus dem Gehäuse (2) absaugt, welche damit durch das Koaleszenz-Filter (20) in das untere Ende (21) der Kammer (19) gezogen wird. Beim Durchtritt der Flüssigkeit durch das Koaleszens-Filter wird weiteres in der Flüssigkeit befindliches Öl abgeschieden, das nach oben aufsteigen und sich mit dem aufgeschwommenen Ölfilm (30) verbinden kann.

Der unterste Sensor (26) spricht an, wenn sich in seinem Bereich kein Wasser oder keine Wasseremulsion befindet und somit der Spiegel (31) unter ihn abgesunken ist. Dann liefert der unterste Sensor (26) ein Steuersignal, welches die Pumpe (23) ausschaltet. Da der unterste Sensor (26) deutlich über dem oberen Rand (32) der Kammer (19) und damit über dem oberen Ende des Koaleszenz-Filters (20) liegt, wird verhindert, daß die Pumpe (23) den aufgeschwommenen Ölfilm (30) absaugen kann.

Für Notfälle, d. h. wenn die Steuerung mit den Sensoren (24, 25, 26) nicht oder nicht befriedigend funktioniert, ist im Gehäuse (2) eine als Ablauf bzw. Überlauf dienende Rohrleitung (33) angeordnet, die über dem obersten Sensor (24) aus dem Gehäuse (2) herausgeführt ist und deren unteres Einlaufende (35) im Abschnitt (14) des Gehäuses (2) nahe dessen Boden (34) mündet.

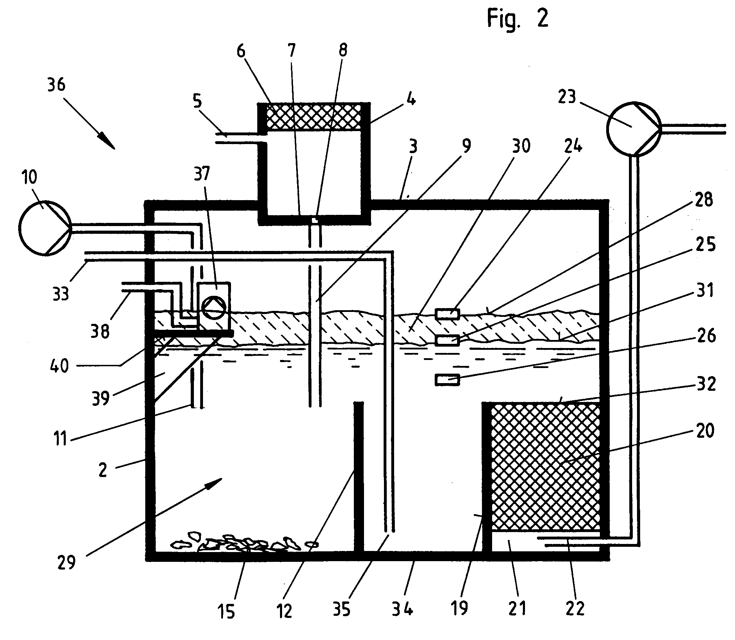

Die in Fig. 2 dargestellte Ausführungsform einer Vorrichtung (36) zum Abscheiden von aufgeschwommenem Öl von Öl-Wasser-Gemischen hat weitgehend denselben Aufbau wie die in Fig. 1 dargestellte Vorrichtung (1), so daß sich die nachfolgende Beschreibung lediglich auf die unterschiedliche Ausführung für die Ölabfuhr beschränkt und in Fig. 2 die mit der Ausführungsform gemäß Fig. 1 gleichen Teile mit denselben Positionsziffern bezeichnet sind.

Ausführungsform gemäß Fig. 1 gleichen Teile mit denselben Positionsziffern bezeichnet sind.

Bei der in Fig. 2 dargestellten Vorrichtung (36) wird das im Ölfilm (30) aufgeschwommene Öl mit einer in den Ölfilm eintauchenden Pumpe (37) abgesaugt und durch eine Druckleitung (38) dieser Pumpe abgeführt. Daher ist kein Trichter zum Ansammeln des aufgeschwommenen Öles notwendig.

Die Pumpe (37) ist auf einer Konsole (39) angeordnet, deren horizontal verlaufende Platte (40) tiefer als der oberste Sensor (24), mit ihrer Oberseite aber höher als der mittlere Sensor (25) angeordnet ist. Dadurch ist gewährleistet, daß die Pumpe (37) in den aufgeschwommenen Ölfilm (30) eintaucht, wenn dessen Spiegel (28) den ein entsprechendes Steuersignal abgebenden Sensor (24) erreicht und sich der Ölfilm (30) auch noch im Bereich des mittleren Sensors (25) befindet.

Die in Fig. 2 gezeigte Vorrichtung (36) arbeitet im übrigen in gleicher Weise wie die in Fig. 1 dargestellte Vorrichtung (1), so daß sich eine erneute Beschreibung der Arbeitsweise erübrigt.

Die vorliegende Erfindung schafft die Möglichkeit, einen Ölfilm von einer Wassermasse in einem Sammelbehälter bei schwankendem Füllstand abzuscheiden. Dabei können auch von Öl-Wasser-Gemischen, die an verschiedenen Orten, in unterschiedlichen Mengen und zu unterschiedlichen Zeiten anfallen, in dem Sammelbehälter aufgeschwommenes Öl abgeschieden werden.

Die Feststellung eines Ölfilmes auf dem Wassergemisch erfolgt im wesentlichen durch die beiden oberen Sensoren (24 und 25), die in der Lage sind, zwischen Öl und Wasser zu unterscheiden. Während der Sensor (24) in der Lage ist, Öl festzustellen, ist der Sensor (25) nur in der Lage, Wasser bzw. ein Öl-Wasser-Gemisch oder eine Öl-Wasser-Emulsion mit einer relativ niedrigen Ölkonzentration zu erfassen. Stellt der Sensor (24), der sowohl Öl als auch Wasser bzw. dessen Gemische und Emulsionen erfassen kann, einen Niveaustand oder Flüssigkeitspegel fest, während der Sensor (25) nicht anspricht, bedeutet dies, daß sich zwischen den beiden Sensoren eine geschlossene Ölschicht befindet. Nur bei diesem Schaltzustand oder Logikzustand wird Öl durch das Ventil (18) bzw. die Pumpe (37) abgelassen.

Der zweite Funktionsablauf wird von dem Sensor (25) und dem dritten Sensor (26) organisiert, d.h. diese Sensoren schalten die Absaugpumpe (23) ein und aus, welche das verbleibende Öl-Wasser-Gemisch bzw. die Öl-Wasser-Emulsion, auf der der Ölfilm aufgeschwommen ist, ohne diesen Ölfilm einer weiteren Emulsionstrennanlage zuführt.

Die Sensoren (24, 25 und 26) können zweckmäßig kapazitiv arbeitende Sensoren sein.

Wenn hier von aufgeschwommenem Öl die Rede ist, so muß es sich dabei nicht um reines Öl handeln. Vielmehr wird die aufgeschwommene Ölschicht in der Praxis auch einen mehr oder weniger großen Anteil an Wasser enthalten. Das Wasser enthält emulgiertes Öl nur in verhältnismäßig geringen Mengen.

Die oben beschriebene Vorrichtung kann auch als Arbeitsbehälter für eine Ultrafiltrationsanlage benutzt werden.

## Patentansprüche

1. Vorrichtung zum Abscheiden von aufschwimmendem Öl von Öl-Wasser-Gemischen, mit einem das Gemisch aufnehmenden Behälter (2), der wenigstens einen Zulauf (5) für das Gemisch und getrennte Abläufe (17, 22; 37, 22) für das aufgeschwommene Öl und das übrige Flüssigkeits-Gemisch sowie drei Sensoren (24, 25, 26) aufweist, die höhenmäßig gegeneinander versetzt im oder am Behälter (2) angeordnet sind,
wobei
der am höchsten und der in der Mitte angeordnete Sensor (24, 25) zum Steuern des Ablaufes (18; 37) für das aufgeschwommene Öl (30) vorgesehen sind und der in der Mitte und der am tiefsten angeordnete Sensor (25, 26) zum Steuern des Ablaufes (22, 23) für das übrige Flüssigkeits-Gemisch (29) zu einem Emulsionstrenner ausgebildet und vorgesehen sind, wobei die Sensoren (24, 25, 26) derart ausgelegt sind, daß der oberste Sensor (24) ein Steuersignal abgibt, wenn der oberste Spiegel (28) des Ölfilms (30) den obersten Sensor erreicht, der mittlere Sensor (25) ein Steuersignal abgibt, wenn der oberste Spiegel (31) des übrigen Flüssigkeits-Gemisches (29) den mittleren Sensor erreicht, und der unterste Sensor (26) ein Steuersignal abgibt, wenn der oberste Spiegel (31) des übrigen Flüssigkeits-Gemisches (29) unter den untersten Sensor abgesunken ist, und wobei der Ablauf für das aufgeschwommene Öl und der Ablauf (22, 23) des übrigen Flüssigkeits-Gemisches (29) derart durch die Sensoren (24, 25, 26) gesteuert werden, daß Öl nur dann abgeführt wird, wenn der oberste Sensor (24) ein Steuersignal und der mittlere Sensor (25) kein Steuersignal abgibt, daß übriges Flüssigkeits-Gemisch (29) abgeführt wird, wenn der mittlere Sensor (25) ein Steuersignal abgibt, und daß die Abfuhr von Flüssigkeits-Gemisch (29) gestoppt wird, wenn der unterste Sensor (26) ein Steuersignal abgibt.

2. Vorrichtung nach Anspruch 1, dadurch gekennzeichnet, daß der Ablauf (18) für das aufgeschwommene Öl (30) einen Trichter (16) aufweist, dessen oberer Rand (27) unter dem am höchsten angeordneten Sensor (24) liegt.

3. Vorrichtung nach Anspruch 1 oder 2, dadurch gekennzeichnet, daß der als Ablauf für das aufgeschwommene Öl (30) dienende Trichter (16) in eine Auslaßleitung (17) mündet, welche ein vom obersten Sensor (24) gesteuertes Anlaß-Ventil (18) oder eine vom obersten Sensor (24) gesteuerte Saugpumpe enthält.

4. Vorrichtung nach Anspruch 1, dadurch gekennzeichnet, daß der Ablauf (37) für das aufgeschwommene Öl eine Saugpumpe aufweist, deren Saugseite höhenmäßig zwischen dem obersten (24) und dem mittleren (25) Sensor angeordnet ist.

5. Vorrichtung nach einem der Ansprüche 1 bis 4, dadurch gekennzeichnet, daß der Ablauf des übrigen Flüssigkeits-Gemisches ein Koaleszenz-Filter (20) und eine Saugpumpe (22, 23) enthält.

6. Vorrichtung nach einem der Ansprüche 1 bis 5, dadurch gekennzeichnet, daß die Sensoren (24, 25, 26) kapazitiv arbeitende Sensoren sind.

## Claims

1. Apparatus for separating out floating oil from oil/water mixtures with a vessel (2) receiving the mixture and having at least one inlet (5) for the mixture and separate outlets (17,22; 37,22) for the floating oil and the remaining liquid mixture as well as three sensors (24,25,26) which are set at different heights in or on the vessel (2), the topmost and centrally arranged sensor (24,25) being provided for controlling the discharge (18;37) of the floating oil and the middle and lowest sensors (25,26) being designed and provided for controlling the discharge (22,23) of the remaining liquid mixture (29) to an emulsion separator, in which the sensors (24,25,26) are arranged so that the topmost sensor (24) delivers a control signal when the upper surface (28) of the oil film (30) reaches the topmost sensor, the middle sensor (25) delivers a control signal when the top surface (31) of the remaining liquid mixture (29) reaches the middle sensor and the lowermost sensor (26) delivers a control signal when the upper surface (31) of the remaining liquid mixture (29) has fallen below the lowermost sensor, and the discharge of the floating oil and the discharge (22,23) of the remaining liquid mixture (29) being controlled by the sensors (24,25,26) in such a way that oil is only removed when the topmost sensor (24) delivers a control signal and the middle sensor (25) does not deliver any control signal, that the remaining liquid mixture (29) is removed when the middle sensor (25) delivers a control signal and that the removal of liquid mixture (29) is halted when the lowermost sensor (26) delivers a control signal.

2. Apparatus according to claim 1, characterised in that the outlet (18) for the floating oil (30) comprises a funnel (16) of which the upper rim (27) lies below the topmost sensor (24).

3. Apparatus according to claim 1 or 2, characterised in that the funnel (16) serving as outlet for the floating oil (30) leads into an outlet pipe (17) which contains a valve (18) controlled by the topmost sensor (24) or a suction pump controlled by the topmost sensor (24).

4. Apparatus according to claim 1, characterised in that the outlet (37) for the floating oil comprises a suction pump of which the suction side is arranged at a height between the topmost (24) and middle (25) sensors.

5. Apparatus according to one of claims 1 to 4, characterised in that the outlet for the remaining liquid mixture contains a coalescence filter (20) and a suction pump (22,23).

6. Apparatus according to one of claims 1 to 5, characterised in that the sensors (24,25,26) are capacitively operating sensors.

## Revendications

1. Dispositif pour la séparation d'huile flottant de mélanges huile-eau, comprenant un conteneur (2) recevant le mélange, ledit conteneur présentant au moins une arrivée (5) pour le mélange et des évacuations séparées (17, 22; 37, 22) pour l'huile flottante et le reste du mélange de liquides, ainsi que trois capteurs (24, 25, 26) fixés dans le ou au conteneur (2), décalés en hauteur les uns par rapport aux autres, le capteur (24, 25) situé le plus haut et celui situé au milieu étant prévus pour commander l'évacuation(18, 37) de l'huile flottante, et le capteur (25, 26) situé au milieu et celui situé le plus bas étant prévus et formés pour commander l'évacuation (22, 23) du mélange de liquides (29) restant vers un séparateur d'émulsion; les capteurs (24, 25, 26) étant conçus de telle manière que le capteur (24) situé le plus haut émette un signal de commande lorsque le niveau (28) le plus haut du film d'huile (30) atteint le capteur le plus haut, que le capteur du milieu (25) émette un signal de commande lorsque le niveau (31) le plus haut du mélange de liquides (29) atteint le capteur du milieu, et que le capteur (26) situé le plus bas émette un signal de commande lorsque le niveau (31) le plus haut du mélange de liquide (29) a baissé au-dessous du capteur situé le plus bas; et l'évacuation de l'huile flottante et l'évacuation (22, 23) du mélange de liquides (29) restant étant commandées par les capteurs (24, 25, 26) de telle façon que de l'huile ne peut être évacuée que si le capteur (24) situé le plus haut émet un signal de commande et le capteur (25) du milieu n'en émet pas, de telle façon que le mélange de liquide (29) restant est évacué si le capteur (25) du milieu émet un signal de commande, et de telle façon que l'évacuation du mélange de liquide (29) est arrêté si le capteur (26) situé le plus bas émet un signal de commande.

2. Dispositif selon la revendication 1, caractérisé en ce que l'évacuation (18) pour l'huile (30) flottante comprend un entonnoir (16) dont le bord (27) supérieur est disposé au-dessous du capteur (24) situé le plus haut.

3. Dispositif selon la revendication 1 ou 2, caractérisé en ce que l'entonnoir (16) servant d'évacuation pour l'huile flottante (30) débouche dans une conduite d'évacuation (17) qui contient une vanne d'arrivée (18) commandée par le capteur (24) situé le plus haut, ou une pompe aspirante commandée par le capteur (24) situé le plus haut.

4. Dispositif selon la revendication 1, caractérisé en ce que l'évacuation (37) pour l'huile flottante comprend une pompe dont la partie aspirante est fixée en hauteur entre le capteur situé le plus haut (24) et le capteur du milieu (25).

5. Dispositif selon une des revendications 1 à 4, caractérisé en ce que l'évacuation pour le mélange de liquides restant comporte un filtre à coalescence (20) et une pompe aspirante (22, 23).

6. Dispositif selon une des revendications 1 à 5, caractérisé en ce que les capteurs (24, 25, 26) sont des capteurs travaillant capacitivement.
